# FASCICULE DE BREVET EUROPEEN

(11) **EP 3 019 348 B1**
(45) Date de publication et mention de la délivrance du brevet: **25.09.2019**
(21) Numéro de dépôt: 14736832.8
(22) Date de dépôt: 08.07.2014
(51) Int. Cl.: B60C 11/11

(54) **BANDE DE ROULEMENT POUR POIDS LOURD À BRUIT RÉDUIT**
RAUSCHARME LAUFFLÄCHE FÜR SCHWERLASTFAHRZEUGE
LOW-NOISE TREAD FOR HEAVY VEHICLES

(30) Priorité: 09.07.2013 FR 1356742
(43) Date de publication de la demande: 18.05.2016
(73) Titulaire: Compagnie Générale des Etablissements Michelin, 63000 Clermont-Ferrand (FR)
(72) Inventeur: QUANTINET, Benjamin, F-63040 Clermont-Ferrand Cedex 9 (FR); MARLIER, Fabien, F-63040 Clermont-Ferrand Cedex 9 (FR)
(74) Mandataire: Diernaz, Christian
(86) Numéro de dépôt international: PCT/EP2014/064642
(87) Numéro de publication internationale: WO 2015/004150

(56) Documents cités:
- EP-A1- 1 207 058
- EP-A1- 2 371 582
- EP-A2- 1 304 239

## Description

### DOMAINE DE L'INVENTION

La présente invention concerne les bandes de roulement des pneus pour poids lourd et plus particulièrement une amélioration du dessin de sculpture de ces bandes permettant une réduction sensible du bruit en roulage.

### ÉTAT DE LA TECHNIQUE

Il est connu - notamment par la demande de brevet JP 3-271003, un pneu pour véhicule poids lourd dont la bande de roulement est pourvue d'un dessin de sculpture non symétrique par rapport au plan médian ; ce plan médian passe par les points radialement les plus à l'extérieur du pneu et divise le pneu en deux parties.

Dans ce document, le dessin de la sculpture est directionnel, c'est-à-dire qu'il présente un sens préférentiel en roulage. Par ailleurs cette sculpture montre de part et d'autre d'un plan distinct du plan équatorial des dessins de sculpture qui ne sont pas symétriques.

Pour les bandes de roulement de pneu poids lourd sur essieu moteur, il est nécessaire de prévoir la présence de cavités pour conférer une adhérence appropriée au pneumatique afin de pouvoir transmettre un couple moteur et/ou freineur tout en générant une capacité volumique appropriée de stockage de l'eau par temps de pluie.

Ces cavités sont formées le plus souvent par des rainures elles-mêmes disposées selon le sens longitudinal (dit aussi « circonférentiel ») de la bande de roulement ainsi que dans le sens transversal (dit aussi « axial ») voire en oblique.

Lorsqu'un véhicule poids lourd équipé de pneus ainsi pourvus de rainures roule sur une chaussée, les arêtes délimitant chaque rainure transversale entrant dans la zone de contact et sortant de la région de contact avec la chaussée génèrent du bruit. La somme des émissions acoustiques générées par l'ensemble des arêtes de toutes les rainures transversales entrant et sortant de la région de contact constitue un spectre fréquentiel et génère un niveau de bruit global plus ou moins important.

Des normes, différentes selon les zones géographiques, ont imposé des réductions au bruit global émis par les pneus. L'évolution des normes telle qu'annoncée à l'horizon 2017, génère un besoin d'obtenir des pneus dont le niveau de bruit en roulage sera réduit d'au moins 2 dBA.

Le respect de ces normes nécessite une conception adaptée des pneus notamment ceux destinés à être montés sur essieu moteur (« *drive* » en anglais).

C'est dans ce cadre que les équipes de recherche travaillent pour abaisser le niveau de bruit sans altérer les autres performances des pneumatiques.

### Définitions :

Plan médian (ou plan équatorial) : c'est un plan perpendiculaire à l'axe de rotation d'un pneu et passant par les points dudit pneu radialement les plus éloignés dudit axe. Ce plan divise la bande de roulement en deux moitiés d'égales largeurs axiales.

Un bloc est un élément en relief formé sur la bande de roulement qui est délimité par des creux ou rainures et comprenant des parois latérales et une face de contact destinée à venir en contact avec la chaussée pendant le roulage. L'intersection de chaque paroi latérale avec la face de contact forme une arête.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Par axialement vers l'extérieur, on entend une direction qui est parallèle à l'axe de rotation du pneu et dirigée vers l'extérieur de la cavité interne du pneu.

Les conditions usuelles de roulage du pneu ou conditions d'utilisation sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

L'ensemble des découpures réalisées sur une bande de roulement forme un dessin de sculpture. Ce dessin de sculpture est dit directionnel dès lors qu'il impose un sens préférentiel de roulage ; ce sens préférentiel de roulage peut être indiqué sur la bande par un signe visible de l'utilisateur facilitant le montage du pneu sur le véhicule.

Le document EP 1304 239 A2 montre un pneu pour véhicule poids lourd qui est considéré comme un art antérieur proche de la présente invention. Les documents EP 2371582 et EP 1207058 montrent également des bandes de roulement constituant un art antérieur proche de la présente invention.

### BREF EXPOSÉ DE L'INVENTION

La présente invention vise à obtenir une famille de dessin de sculptures de bande de roulement de pneu destiné à équiper notamment un essieu moteur d'un véhicule poids lourd, ce dessin de sculpture conférant au pneu à la fois de bonnes performances en usure, en motricité et en bruit de roulage.

A cet effet, l'invention a pour objet une bande de roulement pour pneu destiné à l'équipement d'un véhicule poids lourd, cette bande de roulement comportant une surface de roulement destinée à venir en contact avec une chaussée et à former une région de contact, cette bande comprenant :
- une pluralité de rainures d'orientation générale circonférentielle et une pluralité de rainures d'orientation générale oblique coupant les rainures d'orientation générale circonférentielle pour délimiter des blocs, ces rainures circonférentielles et obliques formant un dessin de sculpture directionnel, ce dessin de sculpture directionnel imposant à la bande une direction préférentielle de roulement,
- un plan séparateur parallèle au plan médian séparant une partie de sculpture d'un côté dudit plan et une partie de sculpture de l'autre côté,
- les rainures circonférentielles délimitant au moins trois rangées intermédiaires formées d'une pluralité de blocs et deux rangées de bord pourvues de blocs et situées axialement à l'extérieur des rangées intermédiaires.
   Cette bande est telle que chaque bloc des rangées de blocs comprend une face de contact formant une partie de la surface de roulement, une face avant et une face arrière ainsi que deux faces latérales,
- la face avant et la face arrière coupant la face de contact selon une arête d'attaque et une arête de fuite respectivement, l'arête d'attaque d'un bloc entrant dans le contact en roulage avant l'arête de fuite du même bloc lorsque la bande roule selon la direction de roulement.
   Cette bande de roulement est caractérisée en ce que le dessin de sa sculpture est conçu de manière à ce que les arêtes d'attaque de tous les blocs des rangées formées de blocs soient inclinées et décalées les unes par rapport aux autres dans le sens circonférentiel d'une manière appropriée afin que :
- ces arêtes d'attaque rentrent de façon successive dans le contact,
- l'entrée dans le contact de ces arêtes d'attaque se fait en alternance sur un côté du plan séparateur puis sur l'autre côté dudit plan séparateur dans une sorte de va et vient, - la succession des entrées des arêtes d'attaque Ai de tous les blocs des rangées intermédiaires soit telle que l'extrémité d'une arête d'attaque entrant la dernière dans le contact coïncide avec l'entrée dans le contact d'une extrémité de l'arête de l'attaque située sur l'autre côté par rapport au plan séparateur.

Les arêtes d'attaque entrent de façon successive dans le contact avec la chaussée pendant le roulage dès lors qu'il ne rentre qu'une seule arête d'attaque à la fois dans le contact.

La répartition des arêtes d'attaque est telle qu'en roulage, après qu'une arête d'attaque située sur un premier côté par rapport au plan séparateur est entrée en contact avec la chaussée, une autre arête d'attaque située sur le second côté par rapport au même plan entre alors en contact avec la chaussée suivie ensuite par une arête située sur le premier côté du plan séparateur et ainsi de suite. Il est possible qu'il y ait un léger chevauchement - au plus 10% de la longueur de l'arête la plus grande, c'est-à-dire qu'une première arête est entrée à 90% de sa longueur dans le contact quand une autre arête située de l'autre côté du plan séparateur commence à entrer elle aussi dans le contact. Préférentiellement, il est toutefois souhaitable que les entrées des arêtes se fassent de façon successive sans chevauchement.

L'agencement des arêtes d'attaque, celles-ci étant inclinées par rapport à la direction transversale d'un angle supérieur à zéro degré, génère une succession d'entrées dans le contact desdites arêtes et des rainures obliques et permet de moduler les amplitudes des harmoniques acoustiques en roulage et de diminuer le niveau global d'émission acoustique du pneu en roulage.

Bien entendu, une telle succession de l'entrée des arêtes d'attaque génère une succession d'entrée des arêtes de fuite des mêmes blocs.

Dans une variante optimisée de l'invention, il est judicieux qu'en même temps qu'une arête d'attaque sur un côté de la bande de roulement fini de rentrer dans le contact une autre arête d'attaque sur l'autre côté commence à entrer dans le contact. Géométriquement, cela se traduit par le fait que l'extrémité d'une arête d'attaque entrant la dernière dans le contact coïncide avec l'entrée dans le contact d'une extrémité de l'arête de l'attaque située sur l'autre côté par rapport au plan séparateur.

Il est judicieux que les entrées dans le contact des arêtes d'attaque des blocs des rangées de bord se fassent en respectant la règle suivie par les blocs des autres rangées.

De manière préférentielle, les angles des arêtes d'attaque des blocs d'au moins les rangées intermédiaires sont en valeur absolue au plus égaux à 25 degrés, ces angles étant pris par rapport à la direction transversale.

Encore plus préférentiellement, l'angle moyen de chaque arête d'attaque est au moins égal à 10 degrés et au plus égal à 25 degrés avec la direction transversale.

Dans une variante intéressante, la bande de roulement selon l'invention est telle que les arêtes d'attaque des blocs situés sur un premier côté par rapport au plan séparateur ont une orientation de même signe tandis que sur le second côté par rapport au plan séparateur les arêtes d'attaque ont une orientation telle qu'elles forment un V avec les arêtes d'attaque sur le premier côté.

Dans une autre variante, le plan séparateur est axialement décalé par rapport au plan médian de la bande de façon à avoir au moins une rangée de plus sur un côté par rapport à l'autre côté.

Avantageusement, la bande de roulement selon l'invention combine à l'une quelconque des dispositions précédentes la présence d'un nombre impair de rangées de blocs, ce nombre étant au moins égal à cinq.

Selon une autre variante permettant d'augmenter l'adhérence de la bande dans des conditions de roulage entraînant une augmentation du glissement - notamment par temps de pluie - il est judicieux de former sur au moins chaque bloc des rangées intermédiaires une incision d'orientation générale transversale, ces incisions transversales entrant dans le contact d'une manière décalées les unes par rapport aux autres dans la direction circonférentielle à l'image des arêtes d'attaque des blocs.

L'invention concerne également un pneu pourvu d'une bande de roulement telle que décrite précédemment, ce pneu étant destiné à équiper un essieu moteur d'un véhicule poids lourd.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue partielle d'une surface de roulement d'une bande de roulement selon un premier mode de réalisation de l'invention ;
La figure 2 représente une vue partielle d'une surface de roulement d'une bande de roulement selon un deuxième mode de réalisation de l'invention.

### DESCRIPTION DES FIGURES

Pour faciliter la lecture des figures, des mêmes signes de référence sont employés pour la description de variantes de l'invention dès lors que ces signes de référence renvoient à des éléments d'une même nature que cette nature soit structurelle ou bien fonctionnelle.

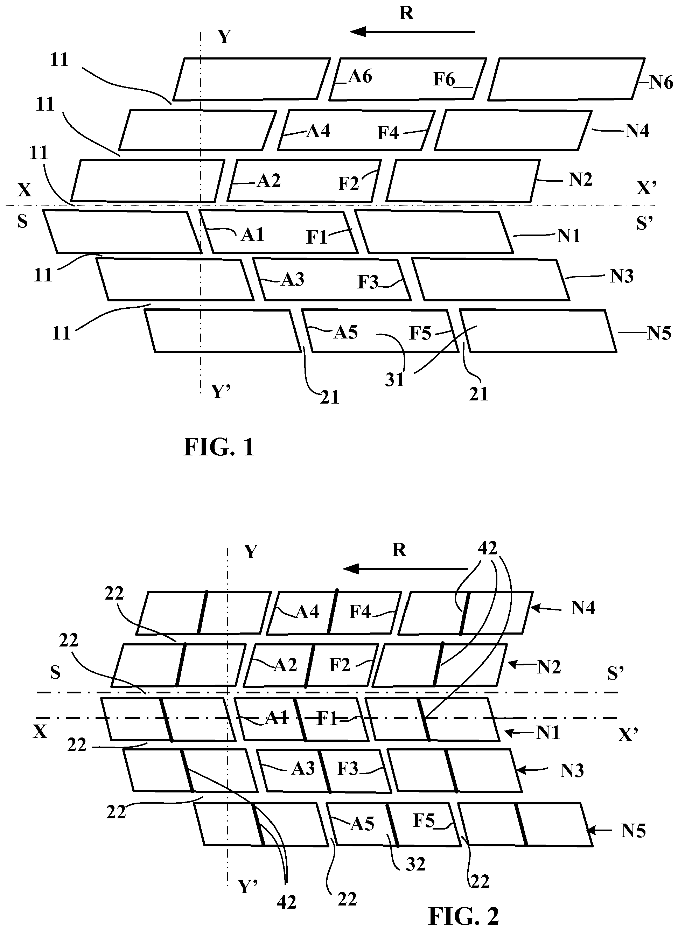

La figure 1 montre une première variante de bande de roulement selon l'invention. Sur cette figure 1 on voit une vue partielle de la surface de roulement d'une bande de roulement pourvue d'un dessin de sculpture ayant six rangées de blocs délimitant cinq rainures rectilignes circonférentielles. Ce dessin de sculpture est directionnel c'est-à-dire qu'il impose un sens de roulage préférentiel pour atteindre les performances attendues. Ce sens de roulage est signifié par une flèche R sur cette figure et peut être indiqué par tout moyen approprié sur le pneu pourvu de cette bande de roulement.

Cette bande comprend quatre rangées intermédiaires et axialement de part et d'autre des rangées d'épaulement ou de bord.

Cette bande est divisée en deux moitiés de même largeur par un plan médian représenté par son intersection avec le plan de la figure par une droite XX'. Un axe YY' perpendiculaire à l'axe XX' représente la direction transversale ou encore celle correspondant à l'axe de rotation du pneu pourvu de ladite bande.

La bande de roulement comprend des rainures obliques 21 s'ouvrant dans les rainures circonférentielles 11 pour former avec ces dernières une pluralité de blocs 31.

Chaque bloc 31 comprend une face de contact visible sur le plan de la figure 1, cette face de contact étant délimitée à l'avant par une arête d'attaque (notée Ai), cette arête correspondant à la première arête du bloc entrant la première dans le contact (le sens de rotation est indiqué par une flèche R) et à l'arrière par une arête de fuite (notée Fi), cette arête correspondant à la dernière arête du bloc sortant du contact au cours du roulage. L'indice i correspond au numéro de rangée : par exemple à la rangée N1 correspond l'indice 1 et donc aux arêtes d'attaque A1 et aux arêtes de fuite F1.

Dans cette première variante, le dessin de sculpture est quasi symétrique, le plan séparateur (repéré par sa trace SS') étant confondu avec le plan médian (noté XX'). Ce plan sépare sur sa gauche trois rangées de blocs dont les arêtes d'attaque Ai et les arêtes de fuite Fi font un même premier angle par rapport à la direction transversale (cette direction étant ici montrée par la direction YY') et sur sa droite deux rangées de blocs dont les arêtes d'attaque et de fuite font un même second angle par rapport à la direction transversale, ce second angle étant de signe opposé au signe des arêtes du premier côté. De manière globale, les arêtes d'attaque et de fuite des blocs situés de part et d'autre du plan séparateur forme une sorte de motif en V, ce motif pointant dans la direction de roulage indiquée par la flèche R. Par quasi symétrique on entend ici que les nombres de rangées situées de part et d'autre du plan séparateur sont identiques.

On numérote les rangées de blocs par les références N1 à N6 en commençant par la rangée N1 située sur un côté (« premier côté ») par rapport au plan médian et au plus près de celui-ci, puis par la rangée N2 en passant sur l'autre côté (« second côté ») du plan médian et en revenant sur le premier côté pour N3 et ainsi de suite jusqu'à N6 en s'éloignant progressivement du plan médian (tous les indices pairs se trouvent donc sur le second côté par rapport au plan médian et tous les indices impairs sur le premier côté).

Le plan médian XX' correspond dans le cas présent au plan séparateur de ce dessin de sculpture dès lors que le plan séparateur distingue un premier côté à gauche de ce plan sur lequel les arêtes d'attaque de tous les blocs ont une orientation de même signe et un second côté à droite de ce plan médian XX' sur lequel les arêtes d'attaque de tous les blocs ont une orientation de signe opposé à celui du premier côté.

Les arêtes d'attaque sont référencées par Ai, i correspondant à l'indice de la rangée dans laquelle se trouve le bloc considéré. Il en est de même pour les arêtes de fuite notées Fi de manière générique.

Les arêtes d'attaque Ai sont positionnées pour entrer dans le contact d'une manière décalée les unes par rapport aux autres et de manière à ce que l'arête d'attaque d'un bloc situé d'un côté par rapport au plan séparateur soit suivie dans le contact par une arête d'attaque d'un bloc situé de l'autre côté par rapport au même plan. Cette alternance se répète tout autour du pneu ayant une telle bande de roulement.

Ainsi, en roulage, l'arête d'attaque A1 d'un bloc de la rangée N1 sur le premier côté entre dans le contact suivie d'une arête d'attaque A2 d'un bloc de la rangée N2 située sur le second côté de la bande par rapport au plan médian (dans cet exemple le plan médian se confond avec le plan séparateur). Cette arête d'attaque A2 d'un bloc de la rangée N2 est, une fois entièrement entrée dans le contact, suivie par l'entrée d'une arête d'attaque A3 d'un bloc de la rangée N3 située sur le premier côté de la bande de roulement par rapport au plan médian suivie ensuite par une arête d'attaque A4 d'un bloc de la rangée N4, puis par celle A5 d'un bloc de la rangée N5 et finalement par celle A6 d'un bloc de la rangée N6. Après cette dernière arête A6, le processus d'entrée dans le contact des arêtes d'attaque Ai reprend avec une arête d'attaque A1 d'un bloc de la rangée N1 et ainsi de suite.

En outre, les volumes des rainures transversales délimitées par les arêtes d'attaque et les arêtes de fuite en vis-à-vis sont tels qu'ils entrent successivement et de manière légèrement décalée dans le contact ce qui est particulièrement favorable pour réduire le bruit en roulage.

Dans une variante non montrée, le passage d'un côté à l'autre peut se faire de manière non régulière, c'est-à-dire en passant de N1 à N4 puis à N3 puis à N6 puis à N5 et enfin à N2.

Dans une variante intéressante, il est préconisé de prévoir un léger chevauchement entre les rainures transversales prises deux à deux. Par chevauchement, on entend qu'avant qu'une arête d'attaque soit entièrement entrée dans le contact, un volume de rainure transversale est partiellement entré dans le contact sans que toutefois l'arête d'attaque délimitant ce volume soit elle-même entrée dans le contact.

La figure 2 montre une deuxième variante d'une bande de roulement selon l'invention.

Dans cette variante, une bande de roulement pour pneu de véhicule poids lourd comprend un dessin de sculpture directionnel, c'est-à-dire imposant un sens de roulage (ici indiqué par une flèche R). Ce dessin est formé de quatre rainures circonférentielles 12, délimitant trois rangées intermédiaires N1, N2, N3 et deux rangées d'épaulement N4, N5. Chaque rangée comprend une pluralité de rainures d'orientation oblique 22 faisant un angle égal en valeur absolue à 15 degrés avec la direction YY' (direction transversale). Ces rainures obliques délimitent sur chaque rangée une pluralité de blocs 32.

Dans cette deuxième variante, le dessin de sculpture est tel que le plan séparateur (repéré par sa trace SS') est positionné au milieu de la rainure circonférentielle séparant sur sa gauche trois rangées de blocs dont les arêtes d'attaque Ai et les arêtes de fuite Fi font un même premier angle par rapport à la direction transversale (cette direction étant ici montrée par la direction YY') et sur sa droite deux rangées de blocs dont les arêtes d'attaque Ai et de fuite Fi font un même second angle par rapport à la direction transversale, ce second angle étant de signe opposé à celui des arêtes du premier côté.

Ce plan séparateur (repéré par sa trace SS') divise donc la bande de roulement en un premier côté à gauche dudit plan, ce premier côté comprenant trois rangées de blocs notées N1, N3, N5 et un second côté à droite du plan séparateur, ce second côté comprenant deux rangées notées N2, N4.

Le plan séparateur SS' se trouve être décalé par rapport au plan médian XX' divisant la bande de roulement en deux moitiés de mêmes largeurs.

L'agencement des blocs 31 des différentes rangées est fait de manière que chaque arête d'attaque Ai entre dans le contact en totalité de manière successive, c'est-à-dire sans que deux arêtes d'attaque n'entrent en totalité ou partiellement dans le contact en même temps.

Dans la variante montrée avec cette figure 2, l'agencement des arêtes d'attaque est tel que dès qu'une arête d'attaque sur un côté de la bande de roulement a fini de rentrer dans le contact une autre arête d'attaque sur l'autre côté du plan séparateur entre dans le contact. Géométriquement, cela se traduit par le fait que l'extrémité d'une arête d'attaque entrant la dernière dans le contact coïncide avec l'entrée dans le contact d'un premier point d'une arête de l'attaque située sur l'autre côté par rapport au plan séparateur.

En outre, chaque bloc 31 est pourvu d'une incision 42 d'orientation oblique, les incisions entrant dans le contact d'une manière décalée les unes par rapport aux autres dans la direction circonférentielle à l'image des arêtes d'attaque des blocs.

Ainsi que cela a été indiqué avec le support de la figure 1, les volumes de rainures obliques entre deux blocs de chaque rangée entrent dans le contact de manière décalée dans la direction circonférentielle de façon à atténuer encore les bruits d'entrée et de sortie de la région de contact avec la chaussée lors du roulage. Toutefois, il existe un léger chevauchement entre les rainures transversales prises deux à deux. Ce léger chevauchement peut être quantifié à au plus 10% de la surface de chaque rainure.

L'invention ici décrite au moyen de deux exemples particuliers n'est bien entendu pas limitée à ces deux seuls exemples et diverses modifications peuvent y être apportées tout en restant dans le cadre défini par les revendications.

## Revendications

1. Bande de roulement pour pneu destiné à l'équipement d'un véhicule poids lourd, cette bande de roulement comportant une surface de roulement destinée à venir en contact avec une chaussée et à former une région de contact, cette bande comprenant
- une pluralité de rainures d'orientation générale circonférentielle (11, 12) et une pluralité de rainures d'orientation générale oblique (21, 22) coupant les rainures d'orientation générale circonférentielle pour délimiter des blocs (31, 32), ces rainures circonférentielles et transversales formant un dessin de sculpture directionnel, ce dessin de sculpture directionnel imposant à la bande une direction de roulement,
- un plan séparateur (SS') parallèle au plan médian (XX') séparant une partie de sculpture à gauche dudit plan et une partie de sculpture à droite,
- les rainures circonférentielles (11, 12) délimitant au moins trois rangées intermédiaires formées d'une pluralité de blocs et deux rangées de bord pourvues de blocs et situées axialement à l'extérieur des rangées intermédiaires, cette bande étant telle que chaque bloc (31, 32) des rangées de blocs comprend une face de contact formant une partie de la surface de roulement, une face avant et une face arrière ainsi que deux faces latérales,
- la face avant et la face arrière coupant la face de contact selon une arête d'attaque Ai et une arête de fuite Fi respectivement, l'arête d'attaque d'un bloc entrant dans le contact en roulage avant l'arête de fuite du même bloc lorsque la bande roule selon la direction de roulement, cette bande de roulement étant **caractérisée en ce que** le dessin de sa sculpture est conçu de manière à ce que les arêtes d'attaque Ai de tous les blocs des rangées formées de blocs soient décalées les unes par rapport aux autres dans le sens circonférentiel d'une manière appropriée afin que :
- ces arêtes d'attaque rentrent de façon successive dans le contact pendant le roulage,
- l'entrée dans le contact de ces arêtes d'attaque se fasse en alternance sur un côté du plan séparateur puis sur l'autre côté du même plan séparateur dans une sorte de va-et-vient,
- la succession des entrées des arêtes d'attaque Ai de tous les blocs des rangés intermédiaires soit telle que l'extrémité d'une arête d'attaque entrant la dernière dans le contact coïncide avec l'entrée dans le contact d'une extrémité de l'arête de l'attaque située sur l'autre côté par rapport au plan séparateur.

2. Bande de roulement pour pneu selon la revendication 1 **caractérisée en ce que** les entrées dans le contact des arêtes d'attaque des blocs des rangées de bord se font en respectant la règle suivie par les blocs des rangées intermédiaires.

3. Bande de roulement selon l'une des revendications 1 ou 2 **caractérisée en ce que** les angles des arêtes d'attaque Ai de tous les blocs (31) sont en valeur absolue supérieur à 0 degrés et au plus égaux à 25 degrés avec la direction transversale.

4. Bande de roulement pour pneu selon la revendication 3 **caractérisée en ce que** chaque arête d'attaque Ai de tous les blocs des rangées intermédiaires fait un angle moyen au moins égal à 10 degrés et au plus égal à 25 degrés avec la direction transversale.

5. Bande de roulement pour pneu selon l'une des revendications 1 à 4 **caractérisée en ce que** le plan séparateur est axialement décalé par rapport au plan médian, les arêtes d'attaque des blocs situés sur un premier côté par rapport au plan séparateur ont une orientation de même signe tandis que sur le second côté les arêtes d'attaque ont une orientation formant un V avec les arêtes sur le premier côté, de façon à avoir au moins une rangée de plus sur un côté par rapport à l'autre côté.

6. Bande de roulement pour pneu selon l'une quelconque des revendications 1 à 5 **caractérisée en ce qu'**elle comprend un nombre impair de rangées de blocs, ce nombre étant au moins égal à cinq.

7. Bande de roulement pour pneu selon la revendication 6 **caractérisée** en ce chaque bloc est pourvu d'au moins une incision d'orientation générale transversale, ces incisions transversales entrant dans le contact d'une manière décalées les unes par rapport aux autres dans la direction circonférentielle à l'image des arêtes d'attaque des blocs.

8. Pneu comprenant une bande de roulement selon l'une quelconque des revendications 1 à 7 **caractérisé en ce qu'**il existe un chevauchement dans le contact entre les rainures transversales prises deux à deux, ledit chevauchement étant tel qu'avant qu'une arête d'attaque soit entièrement entrée dans le contact, un volume de rainure transversale est partiellement entré dans le contact sans que toutefois l'arête d'attaque délimitant ce volume soit elle-même entrée dans le contact, ce chevauchement étant au plus égal à 10% de la surface de ces rainures.

9. Pneu selon la revendication 8, ce pneu étant destiné à équiper un essieu moteur d'un véhicule poids lourd.

## Patentansprüche

1. Laufstreifen für einen Reifen, der zur Ausstattung eines Schwerlastfahrzeugs bestimmt ist, wobei dieser Laufstreifen eine Lauffläche aufweist, die dazu bestimmt ist, mit einer Straße in Kontakt zu kommen und einen Kontaktbereich zu bilden, wobei dieser Streifen enthält
- eine Vielzahl von Rillen allgemeiner Umfangsausrichtung (11, 12) und eine Vielzahl von Rillen allgemein schräger Ausrichtung (21, 22), die die Rillen allgemeiner Umfangsausrichtung schneiden, um Blöcke (31, 32) zu begrenzen, wobei diese Umfangs- und Querrillen ein laufrichtungsgebundenes Profilmuster bilden, wobei dieses laufrichtungsgebundene Profilmuster dem Streifen eine Laufrichtung vorgibt,
- eine Trennebene (SS') parallel zur Mittelebene (XX'), die einen Profilteil links der Ebene und einen Profilteil rechts davon trennt,
- wobei die Umfangsrillen (11, 12) mindestens drei Zwischenreihen, die von einer Vielzahl von Blöcken gebildet werden, und zwei Randreihen begrenzen, die mit Blöcken versehen sind und sich axial außerhalb der Zwischenreihen befinden, wobei dieser Streifen so ist, dass jeder Block (31, 32) der Reihen von Blöcken eine Kontaktseite, die einen Teil der Lauffläche bildet, eine Vorderseite und eine Rückseite sowie zwei Seitenflächen enthält,
- wobei die Vorderseite und die Rückseite die Kontaktseite gemäß einer Vorderkante Ai bzw. einer Hinterkante Fi schneiden, wobei die Vorderkante eines Blocks während des Laufens vor der Hinterkante des gleichen Blocks in Kontakt kommt, wenn der Streifen gemäß der Laufrichtung läuft, wobei dieser Laufstreifen **dadurch gekennzeichnet ist, dass** das Muster seines Profils so konzipiert ist, dass die Vorderkanten Ai aller Blöcke der von Blöcken gebildeten Reihen in Umfangsrichtung in geeigneter Weise zueinander versetzt sind, damit:
- diese Vorderkanten während des Laufens nacheinander in den Kontakt kommen,
- der Eintritt in den Kontakt dieser Vorderkanten abwechselnd auf einer Seite der Trennebene und dann auf der anderen Seite der gleichen Trennebene in einer Art Hin- und Herbewegung erfolgt,
- die Aufeinanderfolge der Eintritte der Vorderkanten Ai aller Blöcke der Zwischenreihen so ist, dass das Ende einer Vorderkante, die als letzte in den Kontakt eintritt, mit dem Eintritt in den Kontakt eines Endes der Vorderkante zusammenfällt, die sich auf der anderen Seite bezüglich der Trennebene befindet.

2. Laufstreifen für Reifen nach Anspruch 1, **dadurch gekennzeichnet, dass** die Eintritte in den Kontakt der Vorderkanten der Blöcke der Randreihen unter Beachtung der von den Blöcken der Zwischenreihen befolgten Regel erfolgen.

3. Laufstreifen nach einem der Ansprüche 1 oder 2, **dadurch gekennzeichnet, dass** die Winkel der Vorderkanten Ai aller Blöcke (31) im Absolutwert größer als 0 Grad und höchstens gleich 25 Grad mit der Querrichtung sind.

4. Laufstreifen für Reifen nach Anspruch 3, **dadurch gekennzeichnet, dass** jede Vorderkante Ai aller Blöcke der Zwischenreihen einen mittleren Winkel mindestens gleich 10 Grad und höchstens gleich 25 Grad mit der Querrichtung bildet.

5. Laufstreifen für Reifen nach einem der Ansprüche 1 bis 4, **dadurch gekennzeichnet, dass** die Trennebene axial bezüglich der Mittelebene versetzt ist, die Vorderkanten der Blöcke, die sich auf einer ersten Seite bezüglich der Trennebene befinden, eine Ausrichtung mit gleichem Vorzeichen haben, während auf der zweiten Seite die Vorderkanten eine Ausrichtung haben, die ein V mit den Kanten auf der ersten Seite bildet, so dass es mindestens eine Reihe mehr auf einer Seite bezüglich der anderen Seite gibt.

6. Laufstreifen für Reifen nach einem der Ansprüche 1 bis 5, **dadurch gekennzeichnet, dass** er eine ungerade Anzahl von Reihen von Blöcken enthält, wobei diese Anzahl mindestens gleich fünf ist.

7. Laufstreifen für Reifen nach Anspruch 6, **dadurch gekennzeichnet, dass** jeder Block mit mindestens einem Einschnitt allgemeiner Querausrichtung versehen ist, wobei diese Quereinschnitte genauso wie die Vorderkanten der Blöcke in zueinander versetzter Weise in der Umfangsrichtung in den Kontakt eintreten.

8. Reifen, der einen Laufstreifen nach einem der Ansprüche 1 bis 7 enthält, **dadurch gekennzeichnet, dass** es eine Überlappung im Kontakt zwischen den Querrillen paarweise gesehen gibt, wobei die Überlappung so ist, dass ehe eine Vorderkante vollständig in den Kontakt eingetreten ist, ein Querrillenvolumen teilweise in den Kontakt eingetreten ist, ohne dass aber die dieses Volumen begrenzende Vorderkante selbst in den Kontakt eingetreten ist, wobei diese Überlappung höchstens gleich 10% der Fläche dieser Rillen ist.

9. Reifen nach Anspruch 8, wobei dieser Reifen dazu bestimmt ist, eine Triebachse eines Schwerlastfahrzeugs zu bestücken.

## Claims

1. Tread for a tyre intended to equip a heavy vehicle, this tread comprising a tread surface intended to come into contact with a roadway and to form a contact patch, this tread comprising
- a plurality of grooves (11, 12) of circumferential overall orientation and a plurality of grooves (21, 22) of oblique overall orientation intersecting the grooves of circumferential overall orientation to delimit blocks (31, 32), these circumferential and transverse grooves forming a directional tread pattern, this directional tread pattern imposing a running direction on the tread,
- a dividing plane (SS') parallel to the midplane (XX') separating part of the pattern to the left of the said plane and part of the pattern to the right,
- the circumferential grooves (11, 12) delimiting at least three intermediate rows formed of a plurality of blocks and two edge rows provided with blocks and situated axially on the outside of the intermediate rows, this tread being such that each block (31, 32) of the rows of blocks comprises a contact face forming part of the tread surface, a front face and a rear face and two lateral faces,
- the front face and the rear face intersecting the contact face along a leading edge Ai and a trailing edge Fi respectively, the leading edge of a block coming into the contact patch during running before the trailing edge of the same block when the tread is running in the running direction, this tread being **characterized in that** its pattern is designed so that the leading edges Ai of all the blocks of the rows formed of blocks are offset from one another in the circumferential direction in a suitable way that:
- these leading edges successively enter the contact patch during running,
- these leading edges enter the contact patch alternately on one side of the dividing plane and then on the other side of the same dividing plane in a kind of back-and-forth arrangement,
the succession whereby the leading edges Ai of all the blocks of the intermediate rows enter the contact patch is such that the end of the last leading edge forming part of the contact patch coincides with an end of the leading edge situated on the other side of the dividing plane entering the contact patch.

2. Tread for a tyre according to Claim 1, **characterized in that** the leading edges of the blocks of the edge rows enter the contact patch according to the same rule followed by the blocks of the intermediate rows.

3. Tread according to either of Claims 1 and 2, **characterized in that** the angles of the leading edges Ai of all the blocks (31) are, in terms of absolute value, greater than 0 degrees and at most equal to 25 degrees to the transverse direction.

4. Tread for a tyre according to Claim 3, **characterized in that** each leading edge Ai of all the blocks of the intermediate rows makes a mean angle at least equal to 10 degrees and at most equal to 25 degrees to the transverse direction.

5. Tread for a tyre according to one of Claims 1 to 4, **characterized in that** the dividing plane is axially offset with respect to the midplane, the leading edges of the blocks situated on a first side of the dividing plane have an orientation of the same sign whereas on the second side the leading edges have an orientation such that they form a V with the edges on the first side, so as to have at least one more row on one side than on the other side.

6. Tread for a tyre according to any one of Claims 1 to 5, **characterized in that** it comprises an odd number of rows of blocks, this number being at least equal to five.

7. Tread for a tyre according to Claim 6, **characterized in that** each block is provided with at least one sipe of transverse overall orientation, these transverse sipes entering the contact patch in a manner offset from one another in the circumferential direction in the manner of the leading edges of the blocks.

8. Tyre comprising a tread according to any one of Claims 1 to 7, **characterized in that** there is an overlap in the contact patch between the transverse grooves considered in twos, the said overlap being such that before a leading edge has fully entered the contact patch, a volume of transverse groove has partially entered the contact patch although without the leading edge delimiting this volume having itself entered the contact patch, this overlap representing at most 10% of the surface area of these grooves.

9. Tyre according to Claim 8, this tyre being intended to equip a drive axle of a heavy vehicle.
